# EUROPÄISCHE PATENTSCHRIFT

(11) **EP 0 710 345 B1**
(45) Veröffentlichungstag und Bekanntmachung des Hinweises auf die Patenterteilung: **04.08.1999**
(21) Anmeldenummer: 94923700.2
(22) Anmeldetag: 29.06.1994
(51) Int. Cl.: F21Q 1/00, B60Q 1/26

(54) **SIGNALLEUCHTE, INSBESONDERE FÜR KRAFTFAHRZEUGE**
INDICATOR LIGHT, IN PARTICULAR A MOTOR-VEHICLE INDICATOR LIGHT
FEUX DE SIGNALISATION, NOTAMMENT POUR AUTOMOBILES

(30) Priorität: 17.07.1993 DE 4324037
(43) Veröffentlichungstag der Anmeldung: 08.05.1996
(73) Patentinhaber: ITT Automotive Europe GmbH, 60488 Frankfurt am Main (DE); Lendle, Reiner, D-74855 Hassmersheim (DE)
(72) Erfinder: LENDLE, Reiner, D-74855 Hassmersheim (DE)
(74) Vertreter: Dreiss, Fuhlendorf, Steimle & Becker
(86) Internationale Anmeldenummer: EP9402117
(87) Internationale Veröffentlichungsnummer: WO9502784

(56) Entgegenhaltungen:
- EP-A- 0 442 095
- DE-A- 2 408 957
- FR-A- 2 597 191
- FR-A- 2 607 081

## Beschreibung

Die Erfindung betrifft eine Signalleuchte, insbesondere für Kraftfahrzeuge, mit einer Lichtquelle, mit einem Gehäuse und mit einer das Gehäuse an der Lichtaustrittsseite abschließenden Abdeckscheibe. Zwischen der Lichtquelle und der Abdeckscheibe können sich weitere Zwischenscheiben befinden, die optische Mittel enthalten oder selbst ein optisches Mittel darstellen. Um das Erscheinungsbild der Signalleuchte im inaktiven Zustand farblich ruhig und harmonisch auszubilden, ist sie mit einem entsprechenden Streifen- oder Gitterraster aus lichtdurchlässigem Material ausgestattet.

Eine Signalleuchte dieser Art ist aus der DE 31 30 085 A1 bekannt. Sie verfügt über eine das Leuchtengehäuse abschließende Lichtscheibe, die aus mehreren Abschnitten besteht, die jeweils einer bestimmten Leuchtenfunktion zugeordnet sind. Diese Abschnitte sind in unterschiedlichen, der jeweiligen Leuchtenfunktion entsprechenden Farben ausgeführt, und an der Lichtscheibenaußenseite befindet sich ein Streifen- oder Gitternetz aus lichtdurchlässigem Material, welches in einer einheitlichen Farbe gehalten ist. Das Streifen- oder Gitternetz ist in einer für eine Signalfunktion bestimmten Farbe ausgeführt und in einem von seiner Farbe abweichenden Lichtscheibenabschnitt angeordnet. Beispielsweise befindet sich im glasklaren Lichtscheibenabschnitt für das Rückfahrlicht ein gelbes oder rotes Streifen- oder Gitternetz, oder in dem gelben Lichtscheibenabschnitt für das Blinklicht ein rotes Streifen- oder Gitternetz an der Lichtscheibenaußenseite. Den Zeichnungen ist zu entnehmen, daß das Streifen- oder Gitternetz an der Außenseite der Lichtscheibe in das Material der übrigen Lichtscheibe eingelassen ist und daß der Querschnitt der Streifen quadratisch oder rechteckig ist. Die Außenfläche der eigentlichen Lichtscheibe und die Außenflächen des Streifen- oder Gitternetzes liegen in der gleichen Ebene.

Eine solche Lichtscheibe mit eingelassenen Streifen- oder Gitternetz ist nicht so einfach herstellbar. Sie weist an der Innenfläche und an den Seitenflächen des Streifen- oder Gitternetzes zahlreiche Übergänge von dem lichtdurchlässigen Material der eigentlichen Lichtscheibe mit einer bestimmten Funktionsfarbe zu dem lichtdurchlässigen Material der eingelassenene Streifen in einer anderen Signalfarbe auf. Auch bei Anwendung des heutzutage gebräuchlichen Mehrfarben-Spritzgießverfahrens entstehen somit zahlreiche Verbindungsflächen zwischen diesen Materialien, die sich jeweils bis an die Außenfläche der Lichtscheibe erstrecken. Bekanntermaßen ist die Verbindung zwischen den Materialien an diesen Verbindungsflächen nie ganz innig. Es verbleiben immer kleinste Spalten bzw. Haarrisse, in welche aggressive Medien wie Frostschutzmittel eindringen und zu Spannungsrissen in der Lichtscheibe führen. Dadurch wird oft die Alterung der Lichtscheibe beschleunigt und die Lebensdauer der Signalleuchte verkürzt.

Bei der Leuchte gemäß DE 31 30 085 A1 sind lichtundurchlässige Lamellen im Strahlengang des von der Lichtquelle ausgesandten Lichtes vor der Lichtscheibe in den Bereichen des lichtdurchlässigen Streifen- oder Gitternetzes angeordnet. Weiterhin befindet sich im Strahlengang vor der Lichtscheibe eine Linsenscheibe, die mit vielen Einzellinsen bestückt ist. Die Einzellinsen sind so ausgeführt und so angeordnet, daß sie das von der Lichtquelle ausgesandte Licht durch die Zwischenräume des andersfarbigen Streifen- oder Gitternetzes der Lichtscheibe hindurchfokussieren.

Es sind auf der Lichtscheibe also zusätzliche Bauteile erforderlich, die den Aufbau und die Fertigung der Leuchte komplizieren. Wie sich bei Versuchen gezeigt hat, kann auch bei einem Streifen- oder Gitternetz in transparent gelber Ausführung in einer für eine farbliche Harmonisierung erforderlichen dichten Anordnung in einer farblosen Lichtscheibe nicht auf die zusätzliche Hindurchfokussierung des Lichtes durch die Zwischenräume des Streifen- oder Gitternetzes verzichtet werden. Der durch das Streifen- oder Gitternetz hindurchtretende und farblich veränderte Lichtanteil ist in diesem Fall doch so groß, daß er zu einer unzulässigen Farbveränderung des abgegebenen Lichtes führt.

Weiterhin ist aus der EP-A-0 442 095 eine Mehrkammerheckleuchte für Fahrzeuge mit einer Lichtquelle, mit einem Gehäuse und mit einer das Gehäuse an der Lichtaustrittsseite abschließenden Abdeckscheibe bekannt. Die Abdeckscheibe weist einen Rückstrahler auf, der in Form eines Rasters von streifenförmig angordneten Rückstrahlertripeln in den Funktionsbereich für das Schlußlicht bzw. Nebelschlußlicht integriert ist. In anderen Bereichen der Abdeckscheibe, die keiner Lichtsignalfunktion zugeordnet sind, sind die Tripel durch Aufrauhung ihrer Oberfläche lichttechnisch unwirksam gemacht. In jedem Fall bestehen die Tripel aber aus lichtdurchlässigem Material, das in der gleichen Farbe ausgeführt ist, wie der Abschnitt der Abdeckscheibe, in den sie als streifenförmiges Raster integriert sind.

Aufgabe der Erfindung ist es, eine Signalleuchte der eingangs genannten Art mit einfachen technischen Mitteln derart weiterzubilden, daß diese im inaktiven Zustand ein farblich harmonisches Erscheinungsbild abgibt und im aktiven Zustand trotzdem die geforderten Beleuchtungs- bzw. Signalfunktionen erfüllt, ohne daß die Lebensdauer der Signalleuchte eingeschränkt ist.

Erfindungsgemäß wird die Aufgabe dadurch gelöst, daß bei einer Signalleuchte mit den Merkmalen des Oberbegriffs des Anspruches 1 derjenige Anteil des von einer Lichtquelle ausgesandten Lichtes, der durch ein lichtdurchlässiges Raster der Abdeckscheibe mit einer zur abzugebenden Funktionsfarbe des betreffenden Abdeckscheibenabschnitts verschiedenen Farbe hindurchtritt und dabei eine von der abzugebenden Funktionsfarbe abweichende Farbänderung erfährt, in außerhalb eines vorgeschriebenen Gesichtsfeldes liegende Bereiche hinter der Abdeckscheibe geleitet wird.

Mit dem vorgeschriebenen Gesichtsfeld ist ein Bereich hinter einem Fahrzeug gemeint, in welchem die Beleuchtungs- oder Signalfunktion einer solchen Leuchte in der vorgeschriebenen Farbe und Intensität wahrnehmbar sein muß. Die konkreten Vorschriften hierfür können territorial verschieden sein.

Nach den Merkmalen des Anspruchs 1 sind keine zusätzlichen Mittel oder Maßnahmen erforderlich, um das von der Lichtquelle ausgesandte Licht durch die Zwischenräume des verschiedenfarbigen Streifen- oder Gitternetzes aus lichtdurchlässigem Material hindurchzuleiten bzw. anders ausgedrückt an dem Streifen- oder Gitternetz vorbeizuleiten, um eine Verfälschung der abgegebenen Funktionsfarbe zu vermeiden. Gemäß Anspruch 1 wird lediglich dafür gesorgt, daß der durch das andersfarbige Raster hindurchtretende und eine unzulässige Farbe aufweisende Lichtanteil in solche Bereiche hinter der Abdeckscheibe geleitet wird, wo er keinen schädlichen Einfluß ausüben kann. Der andere Lichtanteil, der die vorgeschriebene Funktionsfarbe hat, wird in an sich bekannter Weise im wesentlichen in den Bereich des Gesichtsfeldes geleitet. Von einem Betrachtungspunkt aus, der im vorgeschriebenen Gesichtsfeld liegt, kann somit nur Licht in der vorgeschriebenen Funktionsfarbe aber nicht der farbverfälschte Lichtanteil wahrgenommen werden.

Wenn gemäß Anspruch 2 das lichtdurchlässige Raster an der Innenseite, das heißt der Lichtquelle zugewandten Seite, angeordnet ist, werden Spalte und Haarrisse, in welche aggressive Medien eindringen können, vermieden. Vorteilhaft ist zusätzlich, die Rasterteile unmittelbar in einer solchen Form auszubilden, daß diese den durch sie hindurchtretenden Lichtanteil in Bereiche außerhalb des vorgeschriebenen Gesichtsfeldes hinter der Abdeckscheibe leiten. Eine Abdeckscheibe mit derart geformten Rasterteilen ist ohne großen Aufwand nach einem Mehrfarbenspritzgießverfahren herstellbar und es bedarf keines zusätzlichen Bauteiles.

Einfach herzustellen ist eine Abdeckscheibe mit einem Raster nach Anspruch 3, dessen Rasterteile streifenförmige Gebilde an der Innenseite der Abdeckscheibe sind, die durchgehend einen dreieckigen Querschnitt haben. An einer Dreieckseite sind die Rasterteile mit der Innenseite der Abdeckscheibe verbunden. Die anderen Seitenflächen sind zu den ankommenden und auf sie auftreffenden Lichtstrahlen so ausgerichtet, daß dieser Lichtanteil durch Lichtbrechung in außerhalb des vorgeschriebenen Gesichtsfeldes liegende Bereiche geleitet wird. Ein geringer Anteil dieser Lichtstrahlen kann auch direkt auf die Spitze des Dreiecksquerschnittes auftreffen und ohne Brechung senkrecht aus der Abdeckscheibe in den Bereich des Gesichtsfeldes austreten. Dieser Anteil ist aber so gering, daß er das im Gesichtsfeld wahrnehmbare Licht nicht unzulässig verfärbt.

Für verschiedene Fahrzeugausstattungen wird für eine von ihrer geometrischen Form her baugleiche Signalleuchte eine Ausführung der Abdeckscheibe in einem einheitlichen, relativ dunklen Rauchglas gewünscht. Zur Erzielung der benötigten Signalfarben sind im Strahlengang zwischen Lichtquelle und Abdeckscheibe erforderlichenfalls zusätzliche Filtermittel angeordnet. Bei derartigen Leuchten ist die Lichtausbeute relativ gering, so daß teure verspiegelte Reflektoren erforderlich werden.

In dieser Beziehung sind bedeutende Verbesserungen durch die erfindungsgemäßen Merkmale nach Anspruch 5 erreichbar. Demgemäß ist die Abdeckscheibe insgesamt oder in speziellen Abschnitten in einem relativ hellen Rauchglas ausgeführt und mit einem lichtdurchlässigen Raster in Rauchglas mit dunklem Farbton ausgestattet. Durch den relativ großen Anteil der Abdeckscheibe in hellem Rauchglas wird die Lichtausbeute wesentlich erhöht und trotzdem erscheint die Leuchte im inaktiven Zustand aus einer gewissen Entfernung betrachtet in annähernd gleichmäßiger dunkler Rauchglasfarbe. In Abhängigkeit von der Intensität der Lichtquelle sowie den Größenverhältnissen der Leuchtenkammer und der Lichtaustrittsöffnung kann auf einen kostenaufwendigen verspiegelten Reflektor verzichtet werden, das heißt, es genügt, die im Gehäuse vorgesehene Reflektorfläche kostengünstig mit Reflexionslack zu beschichten.

Von besonderem Vorteil ist hierbei, wenn die Rasterteile in dunkler Rauchglasausführung an der Innenseite der Abdeckscheibe in Bezug auf ihre Geometrie den lichtdurchlässigen, andersfarbigen Rasterteilen einer Abdeckscheibe in farbiger Ausführung gleichen. Die Rasterteile in dunkler Rauchglasausführung sind also gemäß Anspruch 6 streifenförmige Gebilde mit durchgehendem Dreiecksquerschnitt, wobei eine Seite des Dreiecks mit der Innenseite der Abdeckscheibe verbunden ist. Nach Anspruch 7 werden die Rasterteile in dunkler Rauchglasausführung von in Streifen angeordneten Tripeln, Pyramiden, Kegeln oder ähnlichen geometrischen Formen gebildet, deren Grundflächen mit der Innenseite der Abdeckscheibe verbunden sind.

Durch diese Maßnahme wird erreicht, daß nach einem Mehrfarben- bwz. Mehrkomponentenspritzgießverfahren auf der gleichen Fertigungsanlage mit dem gleichen Werkzeug wahlweise Abdeckscheiben in farbiger Ausführung oder Abdeckscheiben in Rauchglasausführung herstellbar sind. Die daraus resultierenden Kostenvorteile sind klar erkennbar.

Weitere Merkmale, Einzelheiten und Vorteile der Erfindung sind in den nachfolgenden Ausführungsbeispielen anhand der Zeichnung beschrieben. In der Zeichnung zeigen:
- Figur 1: eine Signalleuchtenkombination für einen Personenkraftwagen in einer Sicht auf die Außenseite der Abdeckscheibe,

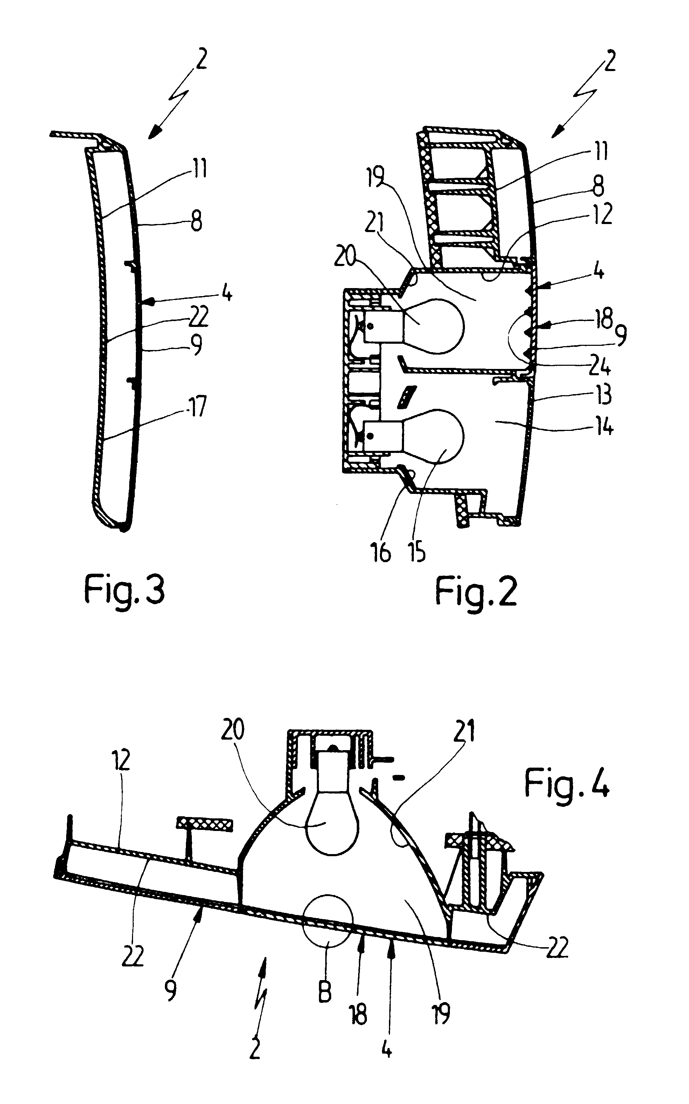

- Figur 2: einen Schnitt II - II durch die Signalleuchte 2 aus Figur 1,
- Figur 3: einen Schnitt III - III durch die Signalleuchte 2 aus Figur 1,
- Figur 4: einen Schnitt IV - IV durch die Signalleuchte 2 aus Figur 1,
- Figur 5: einen Ausschnitt A aus Figur 2 in vergrößerter Darstellung mit schematisch dargestelltem Strahlengang durch ein Rasterteil,
- Figur 6: einen Ausschnitt B aus Figur 4 in vergrößerter Darstellung mit schematisch dargestelltem Strahlengang durch ein Rasterteil und
- Figur 7: einen Schnitt II - II durch die Signalleuchte 2 aus Figur 1 mit schematisch dargestelltem Strahlengang durch das Raster des Bereiches 18 der Abdeckscheibe 4, dem die Funktion des Rückfahrlichtes zugeordnet ist.

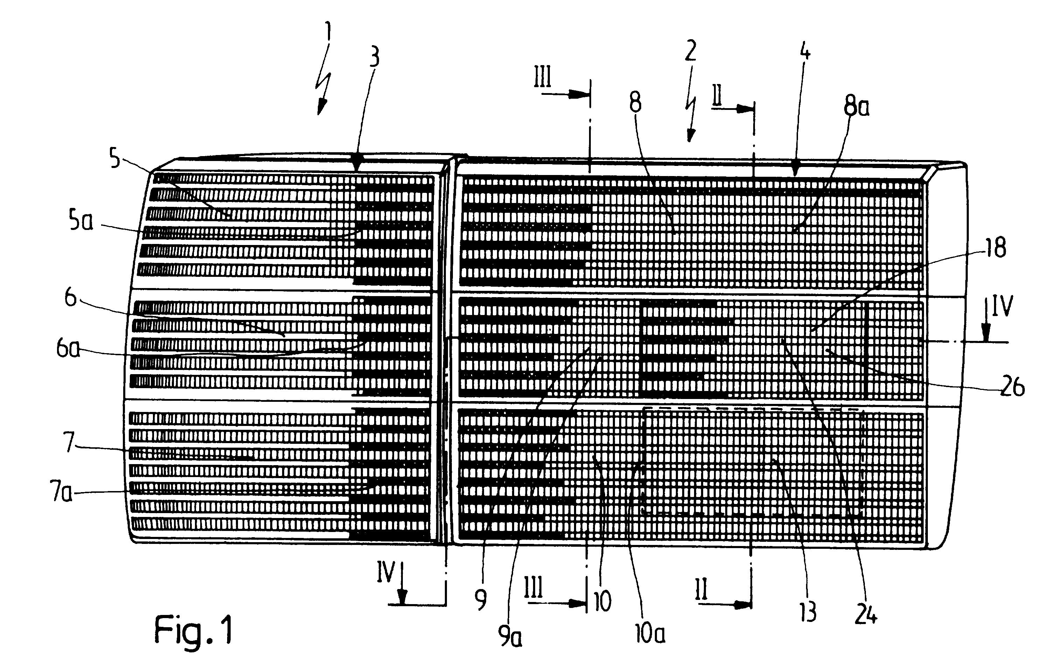

In Figur 1 ist eine Signalleuchtenkombination dargestellt, welche an der linken Seite eines Fahrzeughecks anzuordnen ist und aus einer ersten Signalleuchte 1 und einer zweiten Signalleuchte 2 besteht. Die erste Signalleuchte 1 ist an ein feststehendes Teil der Fahrzeugkarosserie und die Signalleuchte 2 an die Heckklappe des Fahrzeuges anzubauen. Die Abdeckscheibe 3 der Signalleuchte 1 und die Abdeckscheibe 4 der Signalleuchte 2 sind gleichermaßen in jeweils drei Abschnitte unterteilt, die sich über die gesamte Breite der Signalleuchte 1, 2 erstrecken. Der obere Abschnitt 5 der Abdeckscheibe 3 ist der Signalfunktion des Bremslichtes zugeordnet und dementsprechend in transparent rot ausgeführt. Hinter diesem Abschnitt 5 befindet sich im Leuchtengehäuse eine Leuchtenkammer, die in bekannter Weise mit einer Lichtquelle und einem Reflektor ausgestattet ist, wobei der Reflektor durch eine parabelförmige Rückwand gebildet wird, die mit Reflexionslack beschichtet ist. Der mittlere Bereich 6 der Abdeckscheibe 3 ist der Signalfunktion des Blinklichtes zugeordnet und dementsprechend transparent gelb ausgeführt. Hinter diesem Abschnitt 6 befindet sich ebenfalls eine in bekannter Weise ausgebildete Leuchtenkammer. Dem unteren Abschnitt 7 der Abdeckscheibe 3 ist die Signalfunktion des Schlußlichtes zugeordnet. Zusätzlich ist in diesem Abschnitt 7 der Abdeckscheibe 3 die Funktion des Rückstrahlers integriert.
Dementsprechend ist dieser Abschnitt 7 in bekannter Weise in tranparent rot mit integrierten Streifen 7a mit der Struktur von Rückstrahlertripeln von roter Farbe ausgebildet.

Um der Abdeckscheibe 3 auch in Bezug auf ihre Struktur ein möglichst harmonisches Erscheinungsbild zu verleihen, sind in den Abschnitt 5 ebenfalls Streifen 5a mit der Struktur von Rückstrahlertripeln in roter Farbe und in den Abschnitt 6 Streifen 6a mit der Struktur von Rückstrahlertripeln in gelber Farbe integriert. Allerdings sind die Rückstrahlertripel in den Streifen 5a und 6a lichttechnisch unwirksam gemacht.

Die Abdeckscheibe 3 ist also in einen oberen Abschnitt 5 mit der Farbe Rot, einen mittleren Abschnitt 6 mit der Farbe Gelb und einen unteren Abschnitt 7 mit der Farbe Rot untergliedert. Die Abdeckscheibe 4 der Signalleuchte 2 ist farblich prinzipiell so gegliedert wie die Abdeckscheibe 3 der Signalleuchte 1. Der obere Abschnitt 8 der Abdeckscheibe 4 ist in der gleichen Farbe wie der obere Abschnitt 5 der benachbarten Abdeckscheibe 3 ausgeführt und weist Streifen 8a mit der Struktur von Rückstrahlertripeln auf, die den Streifen 5a der benachbarten Abdeckscheibe 3 gleichen. Hinter dem Abschnitt 8 befindet sich keine Lichtquelle, die hinter dem Abschnitt 8 befindliche Wand 11 des Leuchtengehäuses 12 ist mit Reflexionslack beschichtet. Der untere Abschnitt 10 der Abdeckscheibe 4 ist in der gleichen Farbe und Struktur wie der untere Abschnitt 7 der benachbarten Abdeckscheibe 3 ausgeführt, also mit integrierten Streifen 10a von Rückstrahlertripeln, die allerdings lichttechnisch unwirksam sind. Im vorgeschriebenen Abstand vom Abschnitt 5 mit der Bremslichtfunktion befindet sich im Abschnitt 10 der Abdeckscheibe 4 ein Bereich 13, dem die Funktion des Nebelschlußlichtes zugeordnet ist. Hinter diesem Bereich 13 der Abdeckscheibe 4 befindet sich im Gehäuse 12 eine Leuchtenkammer 14, die in an sich bekannter Weise mit einer Lichtquelle 15 und einem Reflektor 16 ausgestattet ist, wobei der Reflektor 16 durch eine parabelförmige Rückwand des Gehäuses 12 mit reflektierender Metallbeschichtung gebildet wird. In den übrigen Teilen befindet sich hinter dem Abschnitt 10 eine Wand 17 des Gehäuses 12, die mit Reflexionslack beschichtet ist.

Der mittlere Abschnitt 9 der Abdeckscheibe 4 ist in der gleichen Farbe, nämlich Gelb, und in der gleichen Struktur, d. h. mit integrierten Streifen 9a von gelben, lichttechnisch unwirksam gemachten Rückstrahlertripeln, wie der mittlere Abschnitt 6 der Abdeckscheibe 3 ausgebildet, ausgenommen ein Bereich 18, dem die Funktion des Rückfahrlichtes zugeordnet ist. Dieser Bereich 18 befindet sich genau über dem Bereich 13 des Abschnittes 10. Hinter dem Bereich 18 befindet sich im Gehäuse 12 eine weitere Leuchtenkammer 19, die ebenfalls in bekannter Weise mit einer Lichtquelle 20 und einem Reflektor 21 ausgestattet ist, wobei der Reflektor durch eine parabelförmige Rückwand des Gehäuses 12 gebildet wird, die mit Reflexionslack beschichtet ist. In den übrigen Teilen befindet sich hinter dem Abschnitt 9 wiederum eine Wand 22 des Gehäuses 12, die mit Reflexionslack beschichtet ist.

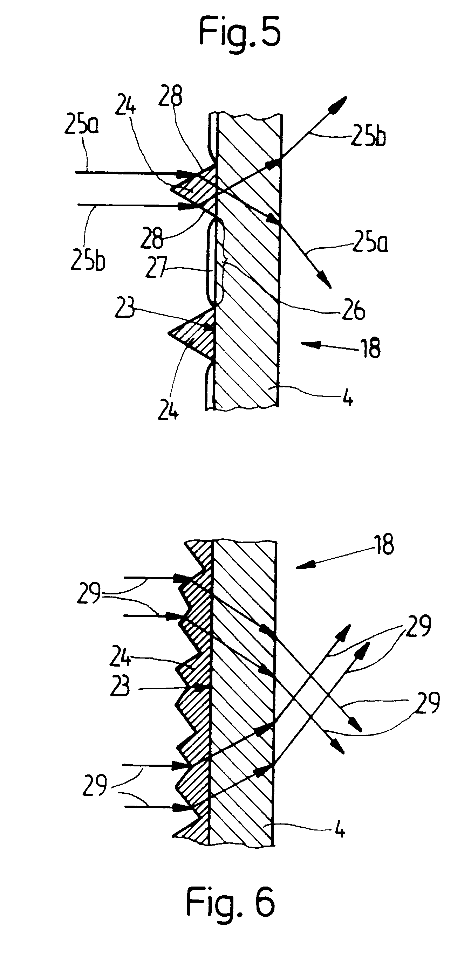

Um nun gemäß der Aufgabe der Erfindung insbesondere im Abschnitt 9 der Abdeckscheibe 4 eine verbesserte farbliche Harmonisierung zu erreichen und trotzdem die Funktion zu gewährleisten, ist die Abdeckscheibe 4 im Bereich 18 in erfindungsgemäßer Weise ausgebildet. Die weitere Beschreibung bezieht sich nunmehr im wesentlichen auf die Figuren 5 und 6, die eine vergrößerte Abbildung wiedergeben.

In dem Bereich 18 ist die Abdeckscheibe 4 aus glasklarem Material hergestellt. An der Innenseite 23, das heißt der Lichtquelle 20 zugewandten Seite, der Abdeckscheibe 4 befinden sich streifenförmige Rasterteile 24 in Form von Tripeln, deren Grundfläche mit der Innenseite 23 der Abdeckscheibe 4 verbunden sind. Diese Rasterteile 24 sind in Bezug auf ihre Farbe und ihr Material der Abdeckscheibe 4 im Abschnitt 9 außerhalb des Bereiches 18 gleich, also transparent gelb. Die Rasterteile 24 verlaufen parallel zueinander und insgesamt annähernd in waagerechter Richtung. Mit anderen Worten ausgedrückt, sind die gelb transparenten Streifen 9a des Abschnittes 9 mit der Struktur von Rückstrahlertripeln über den glasklaren Bereich 18 der Abdeckscheibe 4 an deren Innenseite 23 hinweggeführt undd bilden dort die Rasterteile 24. In einfacher und kostengünstiger Weise ist die Abdeckscheibe 4 mit den Rasterteilen 24 an der Innenseite 23 nach einem Mehrfarben- bzw. Mehrkomponentenspritzgießverfahren herstellbar. Als weiteres Merkmal sind die Rasterteile 24 schmaler ausgeführt als die zeilenförmigen Zwischenräume 26 zwischen den Rasterteilen 24 um die Lichtaustrittsfläche und damit die Intensität des Rückfahrlichtes nicht unnötig stark einzuschränken. Zur besseren Lichtverteilung sind in diesen Zwischenräumen 26 optische Elemente 27 in Form von nebeneinander senkrecht angeordneten länglichen Linsen vorhanden.

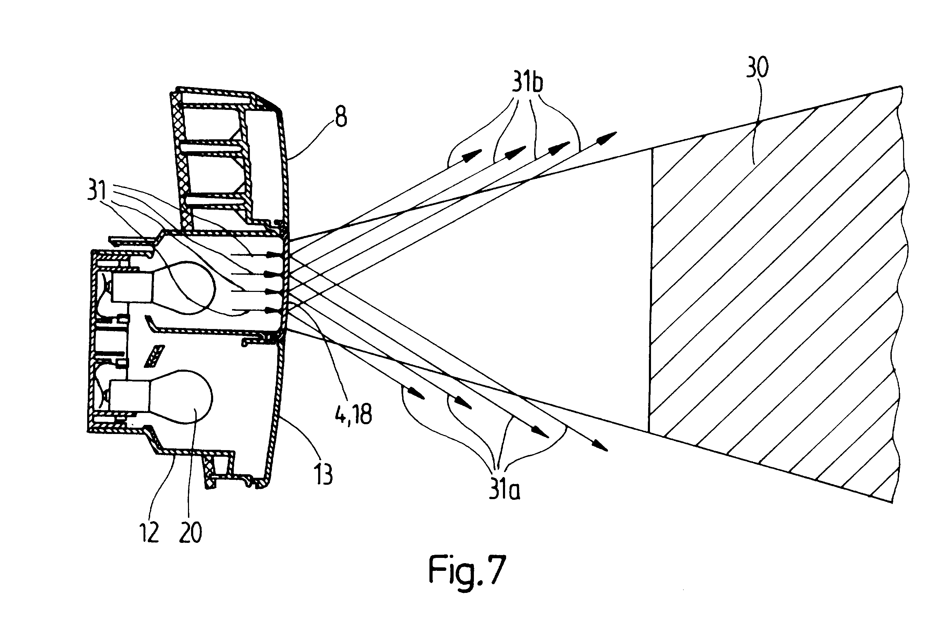

In Figur 5 sind schematisch zwei von der Lichtquelle 20 ausgesandte parallelisierte Lichtstrahlen 25a, 25b dargestellt, wovon der eine Lichtstrahl 25a auf die oberen Seitenfläche eines Rasterteiles 24 und der andere Lichtstrahl 25b auf dessen untere Seitenfläche auftrifft. Das Rasterteil 24 an der Innenseite 23 der in diesem Abschnitt 18 glasklaren Abdeckscheibe 4 ist transparent gelb ausgeführt. Beim Durchtritt durch das Rasterteil 24 werden die Lichtstrahlen 25a, 25b demzufolge gelb verfärbt. Den Gesetzen der Optik folgend werden die Lichtstrahlen 25a, 25b beim Eintritt in das Rasterteil 24 und beim Austritt aus der Abdeckscheibe 4 jeweils gebrochen, wodurch ihre Richtung verändert wird. Der ursprünglich untere Lichtstrahl 25b wird hinter der Abdeckscheibe 4 schräg nach oben und der ursprünglich obere Lichtstrahl 25a hinter der Abdeckscheibe 4 schräg nach unten geleitet. In Abhängigkeit vom Lichtbrechungsverhalten der gewählten Materialien für die Abdeckscheibe 4 und die Rasterteile 24 sind die Seitenflächen 28 des Rasterteiles 24 derartig zu den ankommenden Lichtstrahlen 25a, 25b ausgerichtet, daß diese Lichtstrahlen 25a, 25b nach dem Austritt aus der Abdeckscheibe 4 schräg nach oben oder unten in einen Bereich gelangen, der außerhalb des vorgeschriebenen Gesichtsfeldes 30 (Figur 7) liegt.

Figur 6 zeigt in Draufsicht einen vergrößerten Ausschnitt des Bereiches 18 der Abdeckscheibe 4 für das Rückfahrlicht. In dieser Schnittdarstellung ist zu erkennen, daß das Rasterteil 24 von Tripeln gebildet wird, die mit ihrer Grundfläche mit der Innenseite 23 der Abdeckscheibe 4 verbunden sind. Zur schematischen Darstellung des Strahlenganges sind einige Lichtstrahlen 29 eingezeichnet, die von der Lichtquelle 20 ausgesandt und parallelisiert sind. Diese Lichtstrahlen 29 treffen auf verschiedene Flächen der Tripel auf, treten durch die transparent-gelben Tripel und anschließend durch die glasklare Abdeckscheibe 4 hindurch und werden dabei den Gesetzmäßigkeiten der Optik entsprechend verfärbt und gebrochen. Die einzelnen Flächen der Tripel sind so in Bezug auf die auftretenden Lichtstrahlen 29 ausgerichtet, daß die hindurchtretenden Lichtstrahlen 29 zu solchen seitlichen Bereichen hinter der Abdeckscheibe 4 gebrochen werden, die außerhalb des vorgeschriebenen Gesichtsfeldes 30 liegen.

In Figur 7 ist im Zusammenhang mit dem Schnitt II - II aus Figur in einer Seitenansicht eine schematische Übersicht über den Strahlenverlauf der durch die Rasterteile 24 hindurchtretenden Lichtanteile dargestellt. Die von der Lichtquelle 20 ausgesandten und parallelisierten Lichtbündel 31 (gestrichelte Pfeillinien) treffen auf die Rasterteile auf, treten unter Farbänderung durch diese und anschließend durch die Abdeckscheibe 4 hindurch. Dabei erfolgt durch Lichtbrechung eine Aufspaltung der ankommenden Lichtbündel 31 in Lichbündel 31b, die nach schräg oben geleitet werden, und in Lichtbündel 31a, die nach schräg unten geleitet werden. In jedem Fall werden die Lichtbündel 31a und 31b in Bereiche hinter der Abdeckscheibe 4 geleitet, die außerhalb des vorgeschriebenen Gesichtsfeldes 30 liegen. Analog zu diesen dargestellten schematischen Strahlenverlauf erfolgt auch die in Figur 6 dargestellte Lichtbrechung.

Durch diese beschriebenen Maßnahmen und Mittel wird also erreicht, daß die Leuchtenkombination 1, 2 bzw. die Signalleuchte 2 im inaktiven Zustand ein farblich harmonisches Erscheinungsbild bietet, wobei dieses noch besonders durch die gleiche Struktur der Rasterteile 24 und der Streifen 9a unterstützt wird. Bei Signalgabe ist sichergestellt, daß in dem vorgeschriebenen Gesichtsfeld 30 das Lichtsignal in der vorgeschriebenen Größe Intensität und Farbe wahrnehmbar ist.

Unter anderen Bedingungen kann beispielsweise ein glasklarer oder ein transparent-gelber Bereich einer Abdeckscheibe mit einem Raster in transparent-roter Ausführung ausgestattet sein. In einer Rauchglasausführung kann eine prinzipiell gleiche Abdeckscheibe beispielsweise transparent-hellgrau ausgeführt und mit einem Raster in transparent-dunkelgrau ausgestattet sein.

### Bezugszeichenliste

- 1 -: Signalleuchte
- 2 -: Signalleuchte
- 3 -: Abdeckscheibe
- 4 -: Abdeckscheibe
- 5 -: Abschnitt
- 5a -: Abschnittstreifen
- 6 -: Abschnitt
- 6a -: Abschnit tstreifen
- 7 -: Abschnitt
- 7a -: Abschnittstreifen
- 8 -: Abschnitt
- 8a -: Abschnittstreifen
- 9 -: Abschnitt
- 9a -: Abschnittstreifen
- 10 -: Abschnitt
- 10a -: Abschnittstreifen
- 11 -: Wand
- 12 -: Gehäuse
- 13 -: Bereich
- 14 -: Leuchtenkammer
- 15 -: Lichtquelle
- 16 -: Reflektor
- 17 -: Wand
- 18 -: Bereich
- 19 -: Leuchtenkammer
- 20 -: Lichtquelle
- 21 -: Reflektor
- 22 -: Wand
- 23 -: Innenseite
- 24 -: Rasterteil
- 25a -: Lichtstrahl
- 25b -: Lichtstrahl
- 26 -: Zwischenraum
- 27 -: optisches Element
- 28 -: Seitenfläche
- 29 -: Lichtstrahl
- 30 -: vorgeschriebenes Gesichtsfeld
- 31 -: Strahlenbündel
- 31a -: Strahlenbündel
- 31b -: Strahlenbündel

## Patentansprüche

1. Signalleuchte, insbesondere für Kraftfahrzeuge, mit einer Lichtquelle (20), mit einem Gehäuse (12) und mit einer das Gehäuse (12) an der Lichtaustrittsseite abschließenden Abdeckscheibe (4), welche ein Raster aus lichtdurchlässigen Rasterteilen (24) aufweist, dessen Farbe verschieden ist zu der von dem betreffenden Bereich (18) der Abdeckscheibe (4) abzugebenden Funktionsfarbe, dadurch gekennzeichnet, daß der von einer Lichtquelle (20) ausgesandte und beim Durchtritt durch das Raster eine von der betreffenden Funktionsfarbe abweichende Farbänderung erfahrende Lichtanteil in Bereiche hinter der Abdeckscheibe (4) geleitet wird, die außerhalb eines vorgeschriebenen Gesichtsfeldes (30) liegen.

2. Signalleuchte nach Anspruch 1, dadurch gekennzeichnet, daß die Abdeckscheibe (4) an ihrer Innenseite (23) mit einem lichtdurchlässigen Raster in einer von der abzugebenden Funktionsfarbe dieses Bereiches (18) der Abdeckscheibe (4) verschiedenen Farbe, insbesondere in einer anderen Funktionsfarbe, ausgestattet ist und daß die Rasterteile (24) in Bezug auf ihre Form so ausgebildet sind, daß der von der Lichtquelle (20) abgesandte und durch sie hindurchtretende Lichtanteil in außerhalb des vorgeschriebenen Gesichtsfeldes (30) liegende Bereiche hinter der Abdeckscheibe (4) geleitet wird.

3. Signalleuchte nach Anspruch 2, dadurch gekennzeichnet, daß die Rasterteile (24) streifenförmige Gebilde mit durchgehendem Dreiecksquerschnitt sind, wobei eine Seite des Dreiecks mit der Innenseite (23) der Abdeckscheibe (4) verbunden ist und die anderen Seiten (28) des Dreiecks so zu den ankommenden Lichtstrahlen (25a, 25b, 31) ausgerichtet sind, daß der durch die Rasterteile (24) hindurchtretende Lichtanteil in außerhalb des vorgeschriebenen Gesichtsfeldes (30) liegende Bereiche hinter der Abdeckscheibe (4) geleitet wird.

4. Signalleuchte nach Anspruch 2, dadurch gekennzeichnet, daß die Rasterteile (24) von in Streifen angeordneten Tripeln, Pyramiden, Kegeln oher ähnlichen geeigneten geometrischen Formen gebildet werden, deren Grundflächen mit der Innenseite (23) der Abdeckscheibe (4) verbunden sind und deren andere Flächen so zu den ankommenden Lichtstrahlen (25a, 25b, 31) ausgerichtet sind, daß der durch die Rasterteile (34) hindurchtretende Lichtanteil in außerhalb des vorgeschriebenen Gesichtsfeldes (30) liegende Bereiche hinter der Abdeckscheibe (4) geleitet wird.

5. Signalleuchte, insbesondere für Kraftfahrzeuge, mit einer Lichtquelle (20), mit einem Gehäuse (12) und mit einer das Gehäuse (12) an der Lichtaustrittsseite abschließenden Abdeckscheibe (4), welche ein lichtdurchlässiges Raster aufweist, dadurch gekennzeichnet, daß die Abdeckscheibe (4) zumindest in Abschnitten als Rauchglas in einem relativ hellen Grundton ausgebildet ist und das lichtdurchlässige Raster in Rauchglas mit dunklem Farbton ausgebildet ist.

6. Signalleuchte nach Anspruch 5, dadurch gekennzeichnet, daß das Raster an der Innenseite (23) der Abdeckscheibe (4) angeordnet ist und daß die Rasterteile (24) streifenförmige Gebilde mit durchgehendem Dreiecksquerschnitt sind, wobei eine Seite des Dreiecks mit der Innenseite (23) der Abdeckscheibe (4) verbunden ist.

7. Signalleuchte nach Anspruch 5, dadurch gekennzeichnet, daß das Raster an der Innenseite (23) der Abdeckscheibe (4) angeordnet ist und daß die Rasterteile (24) von in Streifen angeordneten Tripeln, Pyramiden, Kegeln oder ähnlichen geometrischen Formen gebildet werden, deren Grundflächen mit der Abdeckscheibe (4) verbunden sind.

8. Signalleuchte nach einem der Ansprüche 1 bis 9, dadurch gekennzeichnet, daß die Abdeckscheibe (4) nach einem Mehrfarbenspritzgießverfahren hergestellt ist.

## Claims

1. Indicator light, in particular for motor vehicles, with a light source (20), a housing (12) and a cover plate (4) sealing of the light-exit side of the housing (12) and representing an array of transparent array elements (24), and the colour of the array elements differs from the functional colour to be emitted by the corresponding area (18) of the cover plate (4),
**characterized** in that the light portion being emitted by a light source (20) and changing to a colour, when passing through the array, which differs from the corresponding functional colour, is directed into areas behind the cover plate (4) lying outside a specified field of view (30).

2. Indicator light as claimed in claim 1,
**characterized** in that the cover plate (4) is equipped on the inside (23) with a transparent array in a colour that differs from the functional colour of this area (18) of the cover plate (4), in particular in another functional colour, and that the array elements (24) are formed in such a way that the light portion emitted by the light source (20) and passing through the array elements is directed into areas behind the cover plate (4) lying outside the specified field of view (30).

3. Indicator light as claimed in claim 2,
**characterized** in that the array elements (24) are arranged in strips with continuous triangular cross-section, one side of the triangle being connected with the inside (23) of the cover plate (4) and the other sides (28) of the triangle being oriented towards the arriving light beams (25a, 25b, 31) in such a way that the light portion passing through the array elements (24) are directed into areas behind the cover plate (4) which lie outside the specified field of view (30).

4. Indicator light as claimed in claim 2,
**characterized** in that the array elements (24) are formed by triples, pyramids, cones or similar geometrical forms and arranged in strips, the bases of which are connected with the inside (23) of the cover plate (4) and the other surfaces of which are oriented towards the arriving light beams (25a, 25b, 31) in such a way, that the light portion passing through the array elements (34) is guided into areas behind the cover plate (4) lying outside the specified field of view (30).

5. Indicator light, in particular for motor vehicles, with a light source (20), a housing (12), and a cover plate (4) which seals off the housing (12) on the light-exit side and has a transparent array,
**characterized** in that the cover plate (4), at least in sections, is made of tinted glass of a relatively light colour and the transparent array is made of dark tinted glass.

6. Indicator light as claimed in claim 5,
**characterized** in that the array is arranged on the inside (23) of the cover plate (4) and that the array elements (24) are made of strip-shaped elements with a continuous triangular cross-section, one side of the triangle being connected with the inside (23) of the cover plate (4).

7. Indicator light as claimed in claim 5,
**characterized** in that the array is arranged on the inside (23) of the cover plate (4), and in that the array elements (24) are made of triples, pyramids, cones or similar geometrical forms, arranged in strips, the bases of which are connected with the cover plate (4).

8. Indicator light as claimed in any one of claims 1 to 9,
**characterized** in that the cover plate (4) is made by multi-colour injection moulding.

## Revendications

1. Feu de signalisation, notamment pour véhicule automobile, comprenant une source de lumière (20), un boîtier (12) et une vitre de recouvrement (4) qui ferme le boîtier (12) du côté de sortie de la lumière et qui comporte un réseau d'éléments de réseau (24) transparents dont la couleur est différente de la couleur fonctionnelle devant être fournie par la zone (18) concernée de la vitre de recouvrement (4), caractérisé en ce que la partie de la lumière qui est émise par la source de lumière (20) et qui subît, lors de la traversée du réseau, une variation de couleur la faisant différer de la couleur fonctionnelle concernée est guidée à la sortie de la vitre de recouvrement (4) dans des zones qui sont situées en dehors d'un champ de vision prescrit (30).

2. Feu de signalisation suivant la revendication 1, caractérisé en ce que, sur sa face intérieure (23), la vitre de recouvrement (4) est pourvue d'un réseau transparent en une couleur différant de la couleur fonctionnelle devant être délivrée par ladite zone (18) de la vitre de recouvrement (4), notamment en une autre couleur fonctionnelle, et en ce que les éléments de réseau (24) sont réalisés en ce qui concerne leur forme de façon telle que la partie de la lumière qui est émise par la source de lumière (20) et qui les traverse est guidée à la sortie de la vitre de recouvrement (4) dans des zones situées en dehors du champ de vision prescrit (30).

3. Feu de signalisation suivant la revendication 2, caractérisé en ce que les éléments de réseau (24) sont des structures en forme de bande présentant d'une manière continue une section triangulaire, un côté du triangle étant solidaire de la face intérieure (23) de la vitre de recouvrement (4) et les autres côtés (28) du triangle étant orientés par rapport aux rayons lumineux incidents (25a, 25b, 31) de façon telle que la partie de la lumière qui traverse les éléments de réseau (24) est guidée à la sortie de la vitre de recouvrement (4) dans des zones situées en dehors du champ de vision prescrit (30).

4. Feu de signalisation suivant la revendication 2, caractérisé en ce que les éléments de réseau (24) sont formés de trièdres, pyramides, cônes ou formes géométriques appropriées analogues, disposées en bandes, dont les surfaces de base sont solidaires de la face intérieure (23) de la vitre de recouvrement (4) et dont les autres surfaces sont orientées par rapport aux rayons lumineux incidents (25a, 25b, 31) de façon telle que la partie de la lumière qui traverse les éléments de réseau (24) est guidée à la sortie de la vitre de recouvrement (4) dans des zones situées en dehors du champ de vision prescrit (30).

5. Feu de signalisation, notamment pour véhicule automobile, comprenant une source de lumière (20), un boîtier (12) et une vitre de recouvrement (4) qui ferme le boîtier (12) du côté de sortie de la lumière et qui comporte un réseau transparent, caractérisé en ce que la vitre de recouvrement (4) est réalisée, au moins par sections, en verre neutre d'une nuance de base relativement claire et le réseau transparent est réalisé en verre neutre d'une nuance de couleur foncée.

6. Feu de signalisation suivant la revendication 5, caractérisé en ce que le réseau est disposé sur la face intérieure (23) de la vitre de recouvrement (4) et en ce que les éléments de réseau (24) sont des structures en forme de bande présentant d'une manière continue une section triangulaire, un côté du triangle étant solidaire de la face intérieure (23) de la vitre de recouvrement (4).

7. Feu de signalisation suivant la revendication 5, caractérisé en ce que le réseau est disposé sur la face intérieure (23) de la vitre de recouvrement (4) et en ce que les éléments de réseau (24) sont formés de trièdres, pyramides, cônes ou formes géométriques analogues, disposées en bandes, dont les surfaces de base sont solidaires de la vitre de recouvrement (4).

8. Feu de signalisation suivant l'une des revendications 1 à 7, caractérisé en ce que la vitre de recouvrement (4) est réalisée suivant un procédé de moulage par injection en plusieurs couleurs.
